# EUROPÄISCHE PATENTSCHRIFT

(11) **EP 0 830 988 B1**
(45) Veröffentlichungstag und Bekanntmachung des Hinweises auf die Patenterteilung: **16.01.2002**
(21) Anmeldenummer: 97113954.8
(22) Anmeldetag: 13.08.1997
(51) Int. Cl.: B60R 19/24, B62D 21/15

(54) **Rahmen für ein Fahrzeug**
Frame for a vehicle
Châssis pour véhicule

(30) Priorität: 22.08.1996 DE 19633910
(43) Veröffentlichungstag der Anmeldung: 25.03.1998
(73) Patentinhaber: Bayerische Motoren Werke Aktiengesellschaft, 80788 München (DE); NORSK HYDRO ASA, 0240 Oslo (NO)
(72) Erfinder: Scheucher, Klaus-Peter, 80799 München (DE); Clausen, Edvin List, 6270 Toender (DK)
(74) Vertreter: Schernhammer, Herbert

(56) Entgegenhaltungen:
- EP-A- 0 202 098
- EP-A- 0 418 923
- EP-A- 0 601 937
- WO-A-94/27841
- WO-A-97/03865
- DE-A- 2 509 351
- DE-A- 19 517 919
- GB-A- 2 308 100
- PATENT ABSTRACTS OF JAPAN vol. 017, no. 377 (M-1446), 15.Juli 1993 & JP 05 065076 A (NISSAN MOTOR CO LTD), 19.März 1993,

## Beschreibung

Die Erfindung bezieht sich auf einen Rahmen für ein Fahrzeug nach dem Oberbegriff des Anspruchs 1.

Aus der JP 5-65076 A ist ein Längsträger bekannt, der von einem Mehrkammer-Hohiprofil gebildet wird. An den Endabschnitt des Längsträgers ist ein Stoßfänger angebunden. Um im Crashfall eine hohe Kraftspitze bei einsetzender Verformung des Längsträgers zu vermeiden, sind die Trennwände des Mehrkammer-Hohlprofils mit bogenförmigen Ausnehmungen versehen. Da diese Ausnehmungen im Inneren des Profils liegen, ist ein vergleichsweise hoher Bearbeitungsaufwand, beispielsweise durch Fräsen, erfordeflich.

Aus der WO 94/27841 A1 ist einen gattungsgemäßen Rahmen bekannt, wobei die Verbindung zwischen einem Stoßfänger und einem Längsträger des Rahmens mittels einer Aufnahme erfolgt. Die Aufnahme weist gegenüber dem Längsträger einen reduzierten Querschnitt auf, um seitlich Freiräume für die Verformung des Endabschnitts des Längsträgers zu schaffen. Der Endabschnitt des Längsträgers liegt zur unmittelbaren Kraftübertragung direkt an der Aufnahme an. Die Verbindung zwischen Längsträger und Aufnahme erfolgt über Flansche, die von der Aufnahme abstehen.

Auch die EP 0 418 923 A1 zeigt die Verbindung zwischen einem Längsträger und einem Stoßfänger über eine Aufnahme.

Aufgabe der Erfindung ist es, den bekannten Rahmen für ein Fahrzeug weiterzubilden.

Diese Aufgabe wird durch die Merkmale des Anspruchs 1 gelöst.

Gemäß Anspruch 1 ist vorgesehen, den Endabschnitt des Längsträgers nicht direkt an die Aufnahme anstoßen zu lassen. Durch diesen Spalt zwischen Längsträger und Aufnahme wird in der Anfangsphase eines Crashs zunächst die vom Stoßfänger aufgenommene Energie nur über die Flansche auf die Seitenflächen des Längsträgers übertragen. Durch diese Art der Krafteinleitung über die Flansche wird im Seitenbereich des Längsträgers eine "Störstelle" erzeugt, durch die ein schnelles und gleichmäßiges Faltbeulen des Längsträgers eingeleitet wird, sobald nach der Überbrückung des Spaltes (durch Verkürzung des Längsträgers aufgrund der lokalen Faltenbildung) der Endabschnitt des Längsträgers an der Aufnahme unmittelbar zur Anlage kommt. Damit wird ein gleichmäßiger Energieabbau ohne Spitze im Kraftveriauf erreicht.

Der erfindungsgemäße Spalt verursacht keinen nennenswerten Zusatzaufwand bei der Herstellung des Fahrzeugrahmens. Ein weiterer Vorteil der Erfindung liegt in der Möglichkeit, durch den Spalt zwischen Aufnahme und Längsträger Toleranzen in Fahrzeuglängsrichtung auffangen zu können.

Anspruch 3 zeigt eine weitere Möglichkeit zur Vermeidung einer Kraftspitze in der Anfangsphase eines Crashs auf: Durch eine Abschrägung nach Anspruch 3 entsteht ein keilförmiger Spalt zwischen der Stirnseite des Längsträger-Endabschnitts und der Aufnahme, der die Anlagefläche zwischen den beiden Bauteilen verkleinert. Dadurch wird die Einleitung der Längsträgerverformung bereits bei relativ geringen Kräften ermöglicht, so daß erst gar keine Spitze im Kraflverlauf entsteht. Die Abschrägung ist in besonders kostengünstiger Weise durch einfachen Beschnitt des Längsträgers von seiner Außenseite her möglich.

Die Verbindung zwischen dem Längsträger und dem Stoßfänger erfolgt über ein als Aufnahme bezeichnetes Verbindungselement. Durch die Aufnahme wird eine direkte Verbindung zwischen Längsträger und Stoßfänger, beispielsweise durch stumpfe Verschweißung, ersetzt und der erfindungsgemäße Abstand bzw. Keilspalt ermöglicht. Die Aufnahme ist bevorzugt am Stoßfänger angeordnet und weist wenigstens einen in Richtung des Längsträgers verlaufenden Abschnitt auf, der entweder in den Längsträger eingesteckt wird oder den Längsträger außen überlappt. Die Aufnahme wird ihrerseits über übliche Verbindungstechniken mit dem Längsträger bzw. dem Stoßfänger verbunden. Durch die Aufnahme kann das Verformungsverhalten zusätzlich beeinflußt werden.

Der Stoßfänger kann über ein weiteres Deformationselement am Längsträger angeordnet sein. Beispielsweise kann der Stoßfänger über einen Pralldämpfer und eine Aufnahme (siehe Anspruch 8) am Längsträger befestigt werden. Auch andersartige Zwischenelemente sind denkbar. Der Einfachheit halber wird nachfolgend im Zusammenhang mit dieser Anmeldung der allgemeine Begriff "Stoßfänger" verwendet, wobei selbstverständlich auch die mittelbare Anbindung des Stoßfängers mit eingeschlossen ist.

Der Längsträger wird bevorzugt von einem Profil mit einem geschlossenen Querschnitt gebildet, das entweder einstückig ausgebildet oder aus zwei oder mehreren Teilen zusammengesetzt ist. Das Profil ist im Querschnitt rechteck- oder mehreckförmig oder weist einen runden bzw. ovalen Querschnitt auf. Grundsätzlich sind auch offene Profile denkbar.

Eine einzelne Abschrägung gemäß Anspruch 3 ist im Prinzip für die erfindungsgemäße Wirkung ausreichend. Besonders vorteilhaft ist es jedoch gemäß Anspruch 4, symmetrische Abschrägungen, in der Regel in Form zweier gegenüberliegender Abschrägungen, vorzusehen. Zwar wird durch die Verbindung über die Aufnahme eine Führung des Längsträgers erreicht, jedoch könnte sich der Längsträger bei asymmetrischer Abschrägung unter der Krafteinwirkung bei einem Crash entsprechend der Abschrägung ausrichten und in eine vollflächige Anlage kippen. Durch die Weiterbildung der Erfindung nach Anspruch 4 wird sichergestellt, daß der gewünschte Effekt einer verminderten Anlagefläche auch unter dem Einfluß großer Kräfte erhalten bleibt.

Entscheidenden Einfluß auf den Beginn des energieabbauenden Faltens des Längsträgers hat die Verbindung zwischen dem Längsträger und den Flanschen. Erfolgt gemäß Anspruch 5 die Verschweißung zwischen den beiden Elementen nur entlang eines Teils der Anlagefläche, so wird die Krafteinleitung auf einen Teilbereich der Wände des Längsträgers begrenzt und auf diese Weise eine lokal begrenzte "Störstelle" geschaffen, durch die die Faltenbildung im Längsträger gezielt beeinflußt werden kann. Die partielle Verschweißung ergibt eine nur geringe zusätzliche Versteifung, ohne nennenswerte Behinderung der Faltenbildung im Längsträger.

Die Maßnahmen nach Anspruch 3 und 5 können selbstverständlich auch kombiniert werden: Reagiert beispielsweise der Längsträger trotz des erfindungsgemäßen Spaltes (Anspruch 1) und der begrenzten Verschweißung (Anspruch 5) noch zu steif, d. h. erreicht die Kraft in der Anfangsphase des Crashs noch zu hohe Werte, kann durch die die Anbringung von Abschrägungen am Längsträger-Endabschnitt gemäß Anspruch 3 eine weitere Verringerung der anfangs erforderlichen Verformungskräfte erreicht werden.

Anspruch 6 beschreibt eine besonders vorteilhafte Ausführungsform der Erfindung. Bei einem Längsträger mit wenigstens zwei zueinander parallelen Wänden kann die Aufnahme in besonders einfacher Weise als U-förmiger "Schuh" ausgebildet werden, der den Längsträger beispielsweise entweder rechts und links oder unten und oben umgreift.

Durch die Verschweißung gemäß Anspruch 7 werden die steifen Eckbereiche des im Querschnitt rechteckähnlichen Längsträgers von der Verschweißung mit den Flanschen ausgenommen, so daß die Krafteinleitung vom Stoßfänger über die Flansche ausschließlich in die relativ weichen Mittenbereiche der Längsträgerwände erfolgt. Hierdurch kann in einfacher Weise das Faltenbeulen des Längsträgers eingeleitet werden.

Stoßfänger modemer Fahrzeuge sind häufig über Pralldämpfer mit den Längsträgem verbunden. Die Pralldämpfer beinhalten Verformungselemente, die bei geringen Kollisionsgeschwindigkeiten einen begrenzten und reversiblen Einfederungsweg für den Stoßfänger zur Verfügung stellen, ohne daß die dahinter liegende Fahrzeugstruktur beschädigt wird. Gemäß Anspruch 8 wird vorgeschlagen, anstelle der direkten Verbindung zwischen Stoßfänger und Längsträger einem Pralldämpfer voransehen, die von der Aufnahme getragen wird. Die Aufnahme ist über Flansche mit dem Längsträger verbunden.

Darüber hinaus können in die Aufnahme weitere Funktionen integriert werden, wie beispielsweise die Anbindung zusätzlicher Elemente des Fahrzeugrahmens oder anderer Anbauteile. Die Aufnahmeplatte kann z. B. als Strangprofil ausgebildet sein.

Ein mögliches Ausführungsbeispiel der Erfindung ist nachfolgend in der Zeichnung dargestellt und näher beschrieben. Es zeigt:
- Figur 1: eine perspektivische Ansicht auf einen erfindungsgemäßen Rahmen eines Fahrzeugs und
- Figur 2: einen Schnitt entlang der Schnittveriaufslinie II - II in Figur 1.

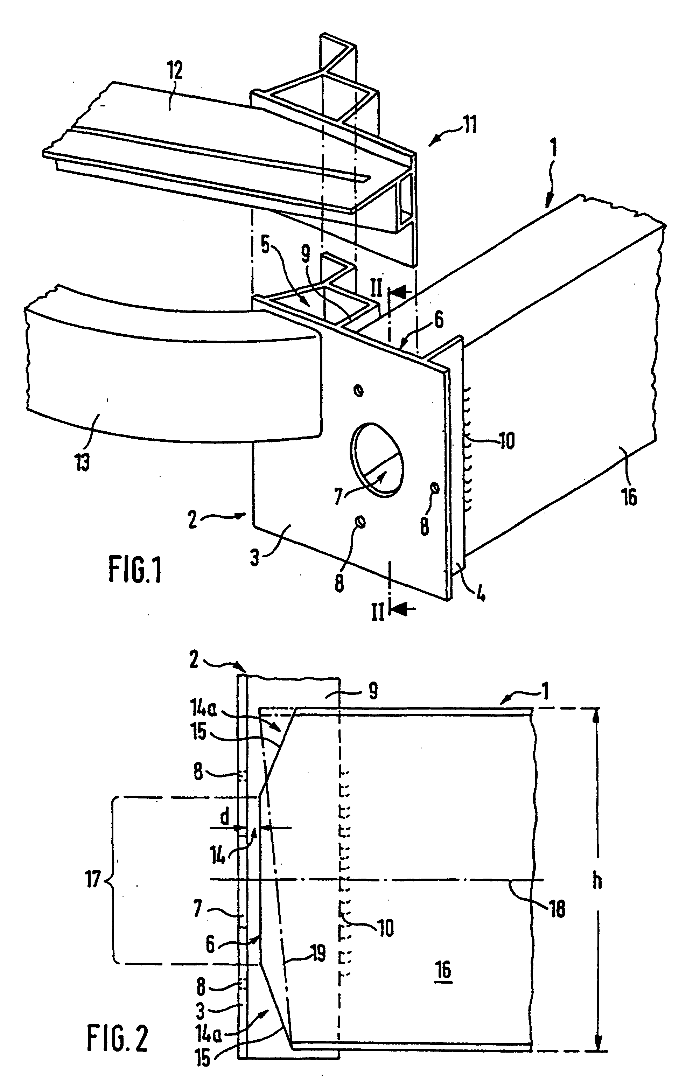

Figur 1 zeigt einen Ausschnitt des linken vorderen Rahmenbereichs eines Fahrzeugs: Eine Aufnahme 2 am Endabschnitt 6 eines vorderen Längsträgers (Motorträger 1) dient der Anbindung eines nicht dargestellten Pralldämpfers, der seinerseits einen Stoßfänger trägt. Die Aufnahme 2 wird von einem Strangprofil aus Aluminium gebildet und setzt sich aus einer Aufnahmeplatte 3, einem Steg 4 und einem Hohlprofil 5 zusammen.

Die Aufnahmeplatte 3 weist eine Öffnung 7 zur Durchführung des Pralldämpfers auf, der in den Hohlraum des Längsträgers 1 hineinragt. Der Pralldämpfer ist über Befestigungsbohrungen 8 mit der Aufnahmeplatte 3 verschraubt. Die Verbindung zwischen der Aufnahmeplatte 3 und dem Längsträger 1 erfolgt über den Steg 4 sowie über die Wand 9 der Kammer 5. Steg 4 und Wand 9 sind als Befestigungsflansche ausgebildet und über Schweißnähte 10 mit den Seitenwänden 16 des Längsträgers 1 verbunden.

Die Aufnahme 2 setzt sich über den Längsträger 1 nach oben hinaus fort. In diesem oberen Abschnitt 11 ist ein oberer Querträger 12 angebunden. Auf Höhe des Längsträgers 1 setzt an das Hohlprofil 5 ein weiterer querverlaufender Träger 13 an. Durch entsprechende Gestaltung der Aufnahme 2 mit zusätzlichen Flanschen oder Kammern können in vielfältiger Weise weitere höher- oder tieferliegende Bauteile angebunden werden.

Figur 2 zeigt die Verbindung zwischen dem Längsträger 1 und der Aufnahme 2 im Schnitt: Der Endabschnitt 6 des Längsträgers 1 und die Aufnahmeplatte 3 stoßen nicht direkt aneinander, sondern sind mit einem Abstand d (Spalt 14) zueinander angeordnet. Das Spaltmaß d beträgt beispielsweise ca. 5 mm. Durch Abschrägungen 15 am oberen und unteren Bereich des Längsträgers 1 entstehen zusätzlich keilförmige Spalte 14a.

Die Schweißnähte 10 gehen von der Mitte 18 des Längsträgers 1 aus. Sie erstrecken sich über ca. zwei Drittel der Höhe h des Längsträgers 1.

Durch die erfindungsgemäße Ausführung des Fahrzeugrahmens wird im Falle eines Crashs ein günstiger Kraftverlauf erreicht: In der Anfangsphase des Crashs werden die Kräfte ausschließlich über die Flansche 4 und 9 und die Schweißnähte 10 in den Längsträger 1 eingeleitet. Durch die bewußt nicht über die gesamte Höhe h des Längsträgers 1 verlaufende Schweißnaht 10 wird in den Seitenwänden 16 des Längsträgers in einem begrenzten Bereich ein "Störeffekt" erzeugt, durch den die Faltenbildung im Längsträgers 1 für eine gezielte Verformung eingeleitet wird. Durch diese Faltenbildung kommt der vordere Endabschnitt 6 des Längsträgers in seinem parallel zur Aufnahmeplatte 3 verlaufenden Mittenbereich 17 nachfolgend zur Anlage mit der Aufnahmeplatte 3. Die Größe der Anlagefläche und damit die für eine Deformation erforderliche anfängliche Kraft kann durch steiler bzw. flacher verlaufende Abschrägungen 15 beeinflußt werden. Auch ist grundsätzlich eine einseitige Abschrägung denkbar, wie in Figur 2 mit strichpunktierter Linie eingezeichnet und mit der Bezugszahl 19 bezeichnet. Die beispielhaft dargestellte Abschrägung 19 verläuft über die gesamte Höhe h des Längsträgers 1 und stellt einen "weichen Beschnitt" dar, der im Crashfall ein kontinuierlich fortschreitendes Anlegen des Längsträgerendabschnitts 6 ohne Kraftüberhöhung erzeugt.

Im weiteren Verlauf des Crashs wird der gesamte Längsträger 1, ausgehend von seinem Endabschnitt 6, gefaltet, wobei die im Bereich der Schweißnähte 10 entstandenen "Störfalten" integriert werden. Aufgrund der Ausnutzung der gesamten Trägerlänge zur Deformation kann auf den Einsatz eines separaten Deformationsgliedes verzichtet werden, wodurch sich eine geringe Baulänge ergibt.

Die Schweißnähte 10 sind so zu bemessen, daß ihre Tragfähigkeit größer ist als die Kraft, die der Pralldämpfer aufnehmen kann, um ein Versagen der Schweißnähte während des Eintauchen des Pralldämpfers in jedem Fall zu vermeiden. Andererseits sind die Schweißnähte 10 so auszubilden, daß sie keine die Faltenbildung hemmende Versteifung des Längsträgers 1 darstellen.

Durch den Spalt 14 können Fertigungstoleranzen in Längsrichtung des Fahrzeugs ausgeglichen werden. Durch die Fortsetzung der Aufnahme 2 in vertikaler Richtung kann der Längsträger 1 in einfacher Weise mit weiteren Elementen der Fahrzeugstruktur verbunden werden. Somit kommt der Aufnahme 2 die Funktion eines Knotenelementes zu. Der Ausgleich von Toleranzen in Richtung der Fahrzeughochachse ist durch Verschiebung der Bauteile 12 und 13 entlang der vertikalen Flächen der Aufnahme 2 möglich.

## Patentansprüche

1. Rahmen für ein Fahrzeug, mit einem etwa in Fahrzeuglängsrichtung verlaufenden Längsträger (1), der an seinem Endabschnitt (6) eine Aufnahme (2) aufweist, die der Anbindung eines etwa in Fahrzeugquerrichtung verlaufenden Stoßfängers dient, wobei die Aufnahme (2) zwei Flansche (4, 9) aufweist, die mit Wände (16) des Längsträgers (1) verbunden sind,
**dadurch gekennzeichnet, daß** der Endabschnitt (6) des Längsträgers (1) nicht an der Aufnahme (2) anstößt.

2. Rahmen nach Anspruch 1,
**dadurch gekennzeichnet, daß** der Endabschnitt (6) des Längsträgers (1) und der Stoßfänger etwa parallel zueinander verlaufen und daß zwischen dem Endabschnitt des Längsträgers und der Aufnahme einen Spalt (14) mit etwa gleichmäßiger Spaltbreite (d) vorhanden ist.

3. Rahmen nach Anspruch 1 und/oder 2,
**dadurch gekennzeichnet, daß** der Endabschnitt (6) des Längsträgers (1) mit wenigstens einer Abschrägung (15, 17) versehen ist, die einen keilförmigen Spalt (14a) zwischen dem Endabschnitt (6) des Längsträgers (1) und der Aufnahme (2) erzeugt.

4. Rahmen nach Anspruch 3,
**dadurch gekennzeichnet, daß** die Abschrägungen (15) im wesentlichen symmetrisch an gegenüberliegenden Seiten des Längsträgers (1) angeordnet sind.

5. Rahmen nach einem der vorangegangenen Ansprüche,
**dadurch gekennzeichnet, daß** die Flansche (4, 9) mit dem Längsträger (1) entlang eines Teilumfangs des Längsträgers (1) verschweißt sind.

6. Rahmen nach einem der vorangegangenen Ansprüche,
**dadurch gekennzeichnet, daß** der Längsträger (1) wenigstens zwei zueinander parallele Wände (16) aufweist und die Aufnahme (2) zwei einander gegenüberliegende Flansche (4, 9) aufweist, die diesen Wänden (16) zugeordnet sind.

7. Rahmen nach Anspruch 5 und/oder 6,
**dadurch gekennzeichnet, daß** der Längsträger (1) einen rechteckförmigen Querschnitt aufweist und die Flansche (4, 9) mit wenigstens zwei Wänden (16) des Längsträgers (1) - ausgehend von deren Mitte (18) - über nur einen Teil der Erstreckung der Wände (16) verschweißt ist.

8. Rahmen nach einem der vorangegangenen Ansprüche,
**dadurch gekennzeichnet, daß** zwischen dem Stoßfänger und dem Längsträger (1) ein Pralldämpfer vorgesehen ist, der über die Aufnahme (2) mit den in Richtung des Längsträgers (1) abstehenden Flanschen (4, 9) am Endabschnitt (6) des Längsträgers (1) befestigt ist.

## Claims

1. A frame for a vehicle comprising a longitudinal member (1) extending approximately in the longitudinal direction of the vehicle and provided at its end portion (6) with a holder (2) for connecting a bumper extending approximately in the transverse direction of the vehicle, the holder (2) having at least two flanges (4, 9) connected to a wall (16) of the longitudinal member (1),
**characterised in that** the end portion (6) of the longitudinal member (1) does not abut the holder (2).

2. A frame according to claim 1,
**characterised in that** the end portion (6) of the longitudinal member (1) and the bumper extend approximately parallel to one another and a gap (14) of approximately uniform width (d) is present between the holder and the end portion of the longitudinal member.

3. A frame according to claim 1 and/or 2,
**characterised in that** the end portion (6) of the longitudinal member (1) has at least one bevel (15, 17) which produces a wedge-shaped gap (14a) between the holder (2) and the end portion (6) of the longitudinal member (1).

4. A frame according to claim 3,
**characterised in that** the bevels (15) are disposed approximately symmetrically on opposite sides of the longitudinal member (1).

5. A frame according to any of the preceding claims,
**characterised in that** the flanges (4, 9) are welded to the longitudinal member (1) along a part of the periphery of the longitudinal member (1).

6. A frame according to any of the preceding claims,
**characterised in that** the longitudinal member (1) has at least two parallel walls (16) and the holder (2) has two flanges (4, 9) opposite one another and associated with the walls (16).

7. A frame according to claim 5 and/or 6,
**characterised in that** the longitudinal member (1) has a rectangular cross-section and the flanges (4, 9) are welded to at least two walls (16) of the longitudinal member (1), starting from the middle (18) thereof, over only a part of the extent of the walls (16).

8. A frame according to any of the preceding claims,
**characterised in that** an impact absorber is provided between the bumper and the longitudinal member (1) and is fastened via the holder (2) to flanges (4, 9) on the end portion (6) of the longitudinal member (1) and projecting in the direction of the longitudinal member (1).

## Revendications

1. Châssis pour véhicule ayant un longeron (1) s'étendant sensiblement dans la direction longitudinale du véhicule dont le segment d'extrémité (6) présente un support (2) qui sert au rattachement du pare-chocs s'étendant sensiblement dans la direction transversale du véhicule, le support (2) présente deux brides (4, 9) reliées aux parois (16) du longeron (1),
**caractérisé en ce que**
le segment d'extrémité (6) du longeron (1) ne vient pas buter sur le support (2).

2. Châssis selon la revendication 1,
**caractérisé en ce que**
le segment d'extrémité (6) du longeron (1) et le pare-chocs sont sensiblement parallèles et une fente (14) de largeur constante (d) se trouve entre le segment d'extrémité (6) du longeron (1) et le support (2).

3. Châssis selon l'une quelconque des revendications 1 ou 2,
**caractérisé en ce que**
le segment d'extrémité (6) du longeron (1) comporte au moins un biseautage (15, 17) qui forme une fente (14a) en forme de coin entre le segment d'extrémité (6) du longeron (1) et le support (2).

4. Châssis selon la revendication 3,
**caractérisé en ce que**
les biseautages (15) sont disposés essentiellement symétriques sur les faces opposées du longeron (1).

5. Châssis selon l'une quelconque des revendications précédentes,
**caractérisé en ce que**
les brides (4, 9) sont soudées au longeron (1) le long d'une partie de la périphérie du longeron (1).

6. Châssis selon l'une quelconque des revendications précédentes,
**caractérisé en ce que**
le longeron (1) présente au moins deux parois (16) parallèles et le support (2) présente deux brides (4, 9) opposées l'une à l'autre et associées aux parois (16).

7. Châssis selon l'une quelconque des revendication 5 et/ou 6,
**caractérisé en ce que**
le longeron (1) a une section rectangulaire et les brides (4, 9) sont soudées à au moins deux parois (16) du longeron (1) à partir du milieu (18) du longeron (1) mais uniquement sur une partie des parois (16).

8. Châssis selon l'une quelconque des revendications précédentes,
**caractérisé par**
un amortisseur anti-chocs entre le pare-chocs et le longeron (1), cet amortisseur étant fixé au segment d'extrémité (6) du longeron (1) par le support (2) avec les brides (4, 9) s'étendant dans la direction du longeron (1).
